# EUROPÄISCHE PATENTSCHRIFT

(11) **EP 3 539 172 B1**
(45) Veröffentlichungstag und Bekanntmachung des Hinweises auf die Patenterteilung: **10.01.2024**
(21) Anmeldenummer: 17807719.4
(22) Anmeldetag: 08.11.2017
(51) Int. Cl.: F16K 17/04, H01M 50/333, F16K 24/04

(54) **DRUCKENTLASTUNGSDECKEL ZUM ABBAU VON IN EINEM ZELLENARTIGEN HOHLRAUM, WIE EINER BATTERIEZELLE, ENTSTEHENDEM DRUCK**
PRESSURE-RELIEF COVER FOR REDUCING PRESSURE ARISING IN A CELL-LIKE CAVITY, SUCH AS A BATTERY CELL
COUVERCLE DE DÉCOMPRESSION POUR RÉDUIRE LA PRESSION GÉNÉRÉE DANS UNE CAVITÉ DE TYPE CELLULE, TELLE QU'UNE CELLULE DE BATTERIE

(30) Priorität: 11.11.2016 DE 102016121605
(43) Veröffentlichungstag der Anmeldung: 18.09.2019
(73) Patentinhaber: Hugo Benzing GmbH & Co. KG, 70825 Korntal-Münchingen (DE)
(72) Erfinder: WEIDMANN, Stephan, 70182 Stuttgart (DE)
(74) Vertreter: Fleck, Hermann-Josef
(86) Internationale Anmeldenummer: PCT/EP2017/078583
(87) Internationale Veröffentlichungsnummer: WO 2018/087136

(56) Entgegenhaltungen:
- EP-B1- 1 336 210
- DE-A1-102011 109 243
- DE-A1-102011 109 310
- DE-A1-102013 016 668
- JP-A- 2000 104 514

## Beschreibung

Die Erfindung bezieht sich auf einen Druckentlastungsdeckel zum Abbau von in einem zellenartigen Hohlraum, wie einer Batteriezelle, entstehendem Druck mit einem Deckelteil, welcher eine Dichtung trägt zum Abdichten einer Gehäuseöffnung bis zu einem vorgegebenen Zellendruck und mit einer Haltevorrichtung versehen ist, die eine an der der Gehäuseöffnung zuzukehrenden Unterseite des Deckelteils angebrachte Federklammer mit mehreren radial nach außen gerichteten Federzungen aufweist, die endseitig mit nach unten von dem Deckelteil weg ausgemuldeten Federabschnitten versehen sind, um den Druckentlastungsdeckel an der Gehäuseöffnung festzuhalten.

Ferner bezieht sich die Erfindung auch auf einen zellenartigen Hohlraum mit einem solchen Druckentlastungsdeckel.

Ein derartiger Druckentlastungsdeckel bzw. ein damit versehener Hohlraum ist in der DE 10 2011 109 243 A1 gezeigt. Der Druckentlastungsdeckel weist ein Deckelteil mit einer Dichtung zum Abdichten einer Gehäuseöffnung bis zu einem vorgegebenen Zellendruck und eine Haltevorrichtung zum Halten des Druckentlastungsdeckels an der Gehäuseöffnung auf. Die Haltevorrichtung umfasst eine Federklammer mit mehreren radial nach außen gerichteten Federzungen, die jeweils einen von dem Deckelteil weg (nach unten) ausgemuldeten Federabschnitt aufweisen und den Deckelteil mit der Dichtung mit vorgegebenem Anpressdruck dicht an den Öffnungsrand andrücken. Ferner ist die Haltevorrichtung mit weiteren radial abstehenden Haltefingern versehen, die den Deckelteil bei Überschreiten des Anpressdrucks durch einen Innendruck des Hohlraums im von der Öffnung begrenzt abgehobenen Zustand am Öffnungsrand halten. Zur Montage der Federklammer an dem Deckelteil weist dieser eine zentrale Haltenase auf, welche von Schneidkrallen im zentralen Bereich der Federklammer formschlüssig umfasst wird. Die Montage des Druckentlastungsdeckels an einer Gehäuseöffnung erfordert dabei mehrere Schritte.

Ähnliche Druckentlastungsdeckel wie die DE 10 2011 109 243 A1 zeigen auch die DE 10 2013 016 668 A1 und die DE 10 2011 109 310 A1.

Ein weiterer Druckentlastungsdeckel ist in der DE 10 2014 111 041 A1 angegeben. Mit diesem bekannten Druckentlastungsdeckel wird ein Entgasungsventil insbesondere im Zusammenhang mit einem Gehäuse einer Batterie eines Kraftfahrzeugs gebildet, wobei eine Membran des Entgasungsventils mittels eines Spannrahmens mit einer vorbestimmten Anpresskraft gegen ein Auflageelement gedrückt wird. Bei einer gewissen Auslösekraft löst sich die Membran von dem Auflageelement und gibt einen Fluidkanal zwischen dem Innenraum des Gehäuses und einer Umgebung des Gehäuses frei. Das Entgasungsventil weist mindestens ein Federelement auf, um den Spannrahmen in Richtung des Auflageelements zu drücken. Das Entgasungsventil ist mittels eines Gehäusekörpers an einer Öffnung des Gehäuses festgelegt und mit Hilfe einer Mutter am Gehäuse befestigt.

Die DE 10 2015 011 663 A1 zeigt einen weiteren Druckentlastungsdeckel im Zusammenhang mit einer Notentgasungseinrichtung, wobei eine Gehäuseöffnung mittels eines Abdeckungsteils abgedeckt ist, das sich bei erhöhtem Druck im Gehäuseinnern verformt, und wobei ein verstellbares Anzeigebauteil zum Anzeigen der Verformung vorgesehen ist, welches mit dem Abdeckungsteil in Kontakt steht.

Der vorliegenden Erfindung liegt die Aufgabe zugrunde, einen Druckentlastungsdeckel der eingangs genannten Art bereitzustellen, der bei zuverlässiger Funktion einfach zusammenbaubar und an der Öffnung eines zellenartigen Hohlraums, wie einer Batteriezelle, montierbar ist, und ein Behältnis mit einem zellenartigen, vor übermäßigem Druckaufbau geschützten Hohlkörper anzugeben.

Diese Aufgabe wird mit den Merkmalen des Anspruchs 1 gelöst. Hierbei ist vorgesehen, dass die Federabschnitte in ihrem in radialer Richtung verlaufenden Längsschnitt nach unten von dem Deckelteil weg in der Weise ausgemuldet sind, dass sie beim Aufdrücken des Deckelteils auf die Gehäuseöffnung durch den Öffnungsrand in radialer Richtung federnd zurückbewegbar sind und nach Durchdringen der Gehäuseöffnung mit den freien Endabschnitten ihrer radial außen liegenden Muldenschenkel unter einen Wandbereich um den Öffnungsrand zurückschnappen.

Der so aufgebaute Druckentlastungsdeckel ist aus wenigen Teilen zusammengesetzt und kann einfach an der Öffnung eines zellenartigen Hohlraums, wie z. B. einer Batteriezelle durch Eindrücken von außen montiert werden, wobei die außen liegenden Muldenschenkel beim Eindrücken des Druckentlastungsdeckels durch die Innenseite des die Öffnung begrenzenden umlaufenden Randes radial nach innen ausgelenkt werden und die freien Endabschnitte danach unter den Wandbereich des Öffnungsrandes zurückschnappen, wobei der Deckelteil mit seiner Dichtung die Öffnung abdichtet. Nach Festlegen kann der Deckelteil mit der Dichtung von der Außenseite des Wandbereichs um den Öffnungsrand abheben, wenn der Innendruck der Batteriezelle eine vorgegebene Druckschwelle überschreitet, wobei die Druckschwelle durch die Federkraft der Federzungen vorgebbar ist. Solange der Innendruck der Batteriezelle geringer ist als die vorgegebene Druckschwelle oder nach Druckabbau in der Zelle wieder geringer wird, wird der Deckelteil mittels der Federkraft der Federzungen mit der Dichtung (wieder) gegen den Wandbereich um den Öffnungsrand gedrückt. Die Druckschwelle kann relativ niedrig vorgegeben werden, z. B. unterhalb von 1 bar, beispielsweise im Bereich von einem Zehntel bar. Außer an Batterie- oder Akkumulatorzellen ist der Einsatz auch an anderen zellenartigen Hohlräumen möglich, wie z. B. einem geschlossenen Behältnis, in dem sich ein Druck aufbauen kann, der eine Berstgefahr verursacht, etwa bei einem Aufbewahrungsbehältnis in einem Flugzeug.

Ein vorteilhafter Aufbau des Druckentlastungsdeckels mit der Ausbildung und Anbringung der Federklammer besteht darin, dass die Federklammer mit einem zentralen Bereich an einem zentral angeordneten Halteabschnitt des Deckelteils angebracht ist.

Für die Montage und die Funktion sind des Weiteren die Maßnahmen von Vorteil, dass die Federabschnitte in ihrem in radialer Richtung verlaufenden Längsschnitt u-förmig nach unten von dem Deckelteil weg ausgemuldet sind und der freie Rand des radial außen liegenden U-Schenkels eine den Wandbereich um die Gehäuseöffnung untergreifende (wenn z. B. auch linienhafte) Stützfläche bildet. Die U-Förmige Ausmuldung ergibt einen freien Außenschenkel, der bei der Montage federnd durch den Öffnungsrand radial nach innen schwenkbar ist und anschließend radial nach außen zurückfedert.

Eine für den Aufbau und die Funktion vorteilhafte Ausgestaltung besteht darin, dass zumindest ein Teil der Federabschnitte soweit von der Unterseite des Deckelteils beabstandet sind, dass im aufgesetzten Zustand die Dichtung unter Andruck auf der Oberseite des Wandbereichs um den Öffnungsrand gehalten ist.

Bei einer weiteren Ausgestaltungsvariante ist vorteilhaft vorgesehen, dass ein weiterer Teil der Federabschnitte von der Unterseite des Deckelteils soweit beabstandet sind, dass sie im aufgesetzten Zustand von der Unterseite des Wandbereichs um den Öffnungsrand beabstandet sind. Hierdurch wird vermieden, dass der Druckentlastungsdeckel bei übermäßigem Druck unbeabsichtigt aus dem Bereich der Gehäuseöffnung wegbewegt wird. Die weiter von der Unterseite des Deckelteils und damit von der Unterseite des Wandbereichs um die Gehäuseöffnung entfernten Enden der weiteren Federabschnitte ergeben dabei ein ungehindertes Abheben des Deckelteils vom Wandbereich um die Öffnung, wenn die vorgegebene Druckschwelle überschritten wird, verhindern dann aber ein unbeabsichtigtes vollständiges Entfernen des Druckentlastungsdeckels aus dem Bereich der Öffnung.

Dabei besteht eine für die Funktion vorteilhafte Ausgestaltung darin, dass die Federzungen, die mit den weiter von der Unterseite des Deckelteils beabstandeten Federabschnitten verbunden sind, nach unten mittels eines ebenfalls an der Unterseite des Deckelteils angebrachten Stützteils abgestützt sind und/oder versteift sind. Hierdurch werden die zu den weiteren Federabschnitten gehörenden Federzungen gegen ein elastisches Zurückschwenken blockiert.

Darüber hinaus ist Gegenstand der Erfindung ein Behältnis mit mindestens einem zellenartigen Hohlraum und mindestens einem Druckentlastungsdeckel des vorstehend beschriebenen Aufbaus.

Die Erfindung wird nachfolgend anhand von Ausführungsbeispielen unter Bezugnahme auf die Zeichnungen näher erläutert. Es zeigen:
- Figur 1: einen in eine Gehäuseöffnung eines zellenartigen Hohlraums, insbesondere einer Batteriezelle, eingesetzten Druckentlastungsdeckel von oben,
- Figur 2: den in eine Gehäuseöffnung eingesetzten Druckentlastungsdeckel nach Figur 1 in perspektivischer Ansicht von unten beziehungsweise innen,
- Figur 3 A: den in eine Gehäuseöffnung eingesetzten Druckentlastungsdeckels in Draufsicht und
- Figur 3 B: einen Querschnitt einer Gehäusewandung und des in eine Gehäuseöffnung eingesetzten Druckentlastungsdeckels entlang einer Schnittlinie A-A.

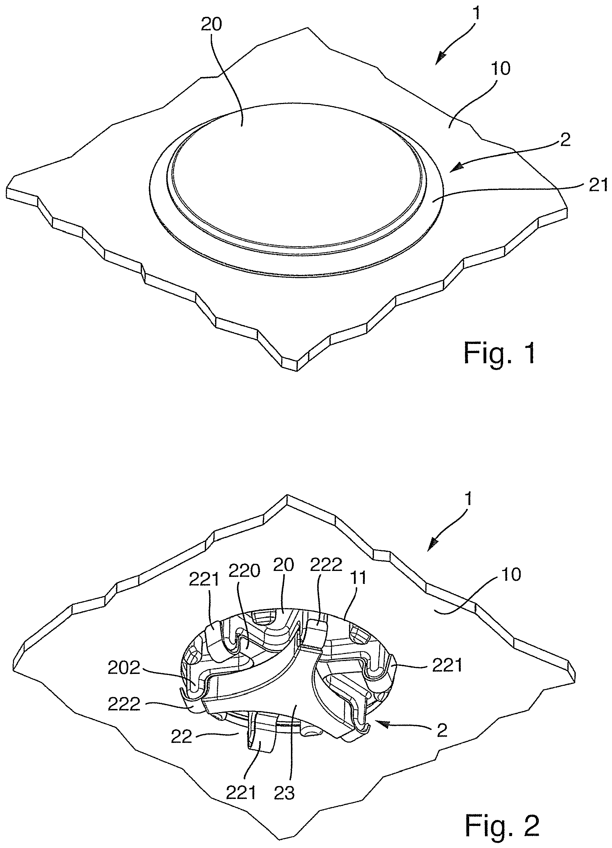

Die Figuren 1 und 2 zeigen einen Ausschnitt eines Gehäuses 1 eines zellenartigen Hohlraums, wie z. B. einer Batteriezelle, mit einer in einer Gehäusewand 10 eingebrachten Gehäuseöffnung 11 der Batteriezelle und einem in die Gehäuseöffnung 11 eingesetzten Druckentlastungsdeckel 2 in perspektivischer Ansicht von oben und von der Unterseite beziehungsweise Innenseite des Gehäuses 1. Der Druckentlastungsdeckel 2 weist einen auf der Oberseite der Gehäusewand 10 um den Rand der Gehäuseöffnung 11 über eine Dichtung 21 aufliegenden Deckelteil 20 sowie eine an dessen Unterseite angebrachte Federklammer 22 und ein ebenfalls an der Unterseite des Deckelteils 20 angebrachtes Stützteil 23 auf. Die vorzugsweise aus Metall bestehende Federklammer 22 weist mehrere, nämlich in dem gezeigten Ausführungsbeispiel sechs, radial nach außen sich erstreckende Federzungen 220 auf. Die Federzungen gehen in ihren Endabschnitten in beispielsweise U-förmig oder z. B. V-förmig nach unten, das heißt von dem Deckelteil 20 weg, ausgemuldete Federabschnitte über, die mit ihren radial außenliegenden freien Federschenkeln den Wandbereich um den Öffnungsrand untergreifen. Drei der Federzungen 220 sind von dem Stützteil 23 unterfangen, so dass sie praktisch nicht nach unten elastisch auslenkbar sind, während die übrigen drei Federzungen 220 nach unten freiliegen und elastisch auslenkbar sind. In Umfangsrichtung sind die Federzungen 220 bei dem gezeigten Ausführungsbeispiel in gleichen Winkelabständen verteilt, wobei sich nach unten freiliegende mit nach unten durch das Stützteil 23 abgestützte Federzungen 220 abwechseln, das heißt zwischen den einzelnen Federzungen 220 in Umlaufrichtung sich ein Winkelabstand von 60 Grad ergibt. Es können auch z. B. mehr als sechs Federzungen 220 vorgesehen sein, die abwechselnd frei liegen und unterfangen sind.

Auch die z. B. U-förmigen oder V-förmigen Endabschnitte der von dem Stützteil 23 unterfangenen bzw. abgedeckten Federzungen 220 liegen frei, so dass die radial außenliegenden Schenkel der ausgemuldeten Federabschnitte nach innen einschwenken können, wenn der Druckentlastungsdeckel 2 von oben in die Gehäuseöffnung 11 eingedrückt wird, wobei der Außenumfang bzw. Außendurchmesser um die radial außenliegenden U- oder V-Schenkel im Bereich ihrer freien Enden etwas größer ist als der Umfang bzw. Durchmesser der zuzuordnenden Gehäuseöffnung 11. Ferner sind die freien Enden der radial außenliegenden U- oder V-Schenkel der Federabschnitte 221, 222 von der Unterseite des Deckelteils 20 und der auf dieser aufliegenden Dichtung 21 so weit entfernt, dass die außenliegenden Schenkel nach Durchtritt durch die Gehäuseöffnung 11 an der Unterseite des Wandbereichs um den Öffnungsrand zurückschnappen können. Jedenfalls sind die radial außen liegenden **Ersetzt die ursprüngliche Seite 8 der Beschreibung**

Schenkel der ausgemuldeten Federabschnitte, also beispielsweise die außenliegenden U- oder V-Schenkel, gegenüber der Flächennormalen des Deckelteils 20 genügend spitzwinklig (z. B. weniger als 45° oder weniger als 60°) entgegen der Eindrückrichtung nach außen geöffnet, so dass sie beim Montieren des Druckentlastungsdeckels sicher nach innen gegen ihre elastische Federkraft ausgelenkt werden.

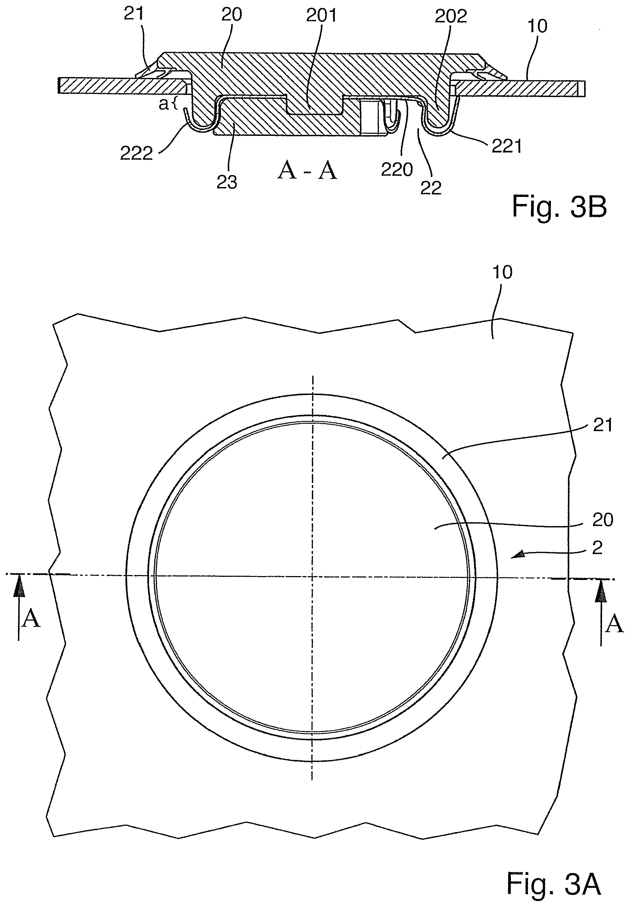

Wie aus den Figuren 2 und 3 B genauer ersichtlich, ist dabei der Abstand zwischen den freien Enden der außenliegenden U-Schenkel von der Unterseite des Deckelteils 20 bei den nicht abgestützten Federzungen 220 geringer als bei den durch das Stützteil 23 abgestützten Federzungen 220, das heißt die U-Schenkel der nicht abgestützten Federzungen 220 bilden lange Federabschnitte 221 und die außenliegenden U-Schenkel der abgestützten Federzungen 220 bilden kurze Federabschnitte 222. Dabei sind die langen Federabschnitte 221 so dimensioniert, dass sich die als Stützflächen ausgebildeten freien Enden der langen Federabschnitte 221 beim angedrückten Zustand des Deckelteils 20 und etwas zusammengedrückter Dichtung 21 an der Unterseite des Wandbereichs um den Öffnungsrand der Gehäuseöffnung 11 unter Spannung abstützen. Zum Einschnappen der langen Federabschnitte 221 unter dem Wandbereich um den Öffnungsrand wird der Deckelteil 20 soweit gegen die Oberseite (Außenseite) des Wandbereichs um den Öffnungsrand gedrückt, dass sich die aus elastischem Material bestehende Dichtung 21 genügend verformt, um sich anschließend wieder auszudehnen und genügende Spannung aufrechtzuerhalten, um ihre Dichtfunktion zu erfüllen.

Hingegen sind die kurzen Federabschnitte 222 im eingesetzten Zustand des Druckentlastungsdeckels 2 mit ihrem freien Endbereich um einen Abstand a von der Unterseite des Wandbereichs um den Öffnungsrand beabstandet. Bei einem Zelleninnendruck, der die durch die freiliegenden Federzungen 220 vorgegebene Druckschwelle übersteigt, hebt sich der Deckelteil 20 mit der Dichtung 21 von der Oberseite des Wandbereichs um die Gehäuseöffnung 11 ab, so dass sich der Innendruck im Zelleninnern abbaut. Damit der Druckentlastungsdeckel 2 nicht aus dem Bereich der Gehäuseöffnung 11 herausbewegt wird, sind die kurzen Federabschnitte 222 vorgesehen, die einen genügenden Abstand a von dem unteren Wandbereich um den Öffnungsrand ergeben, so dass auch bei hohem auftretendem Innendruck der Zelle ein sicherer Druckabbau durch einen entsprechend großen Entlüftungsspalt gegeben ist, andererseits aber der Deckel im Bereich der Gehäuseöffnung 11 gehalten wird, da die zu den kurzen Federabschnitten 222 gehörenden Federzungen 220 durch das Stützteil 23 an einem elastischen Zurückschwenken nach unten gehindert sind.

Die Federklammer 22 ist vorteilhaft an Lagerstrukturen 202 auf der Unterseite des Deckelteils 20 abgestützt und somit auch positioniert, wobei Vorsprünge in die Ausmuldungen der U-förmigen Federabschnitte 221, 222 eingreifen, jedoch genügend Freiraum zum Nach-Innenschwenken der radial außenliegenden U-Schenkel vorhanden ist. Wie die Figuren 2 und 3 erkennen lassen, ist die Federklammer 22 mit einem zentralen Bereich an einem zentralen, nach unten vorstehenden Vorsprung des Deckelteils 20 angebracht, beispielsweise angeschweißt, geklebt und/oder angeschraubt. Auch das relativ starre Stützteil 23 ist an dem zentralen Halteabschnitt 201 des Deckelteils 20 angebracht, beispielsweise auf der Außenseite der Federklammer 22 zusammen mit dieser.

Der vorstehend beschriebene und in den Figuren gezeigte Aufbau ergibt eine vorteilhafte Montageweise bei zuverlässiger Funktion.

## Patentansprüche

1. Druckentlastungsdeckel zum Abbau von in einem zellenartigen Hohlraum, wie einer Batteriezelle, entstehendem Druck mit einem Deckelteil (2), welcher eine Dichtung (21) trägt zum Abdichten einer Gehäuseöffnung (11) bis zu einem vorgegebenen Zellendruck und mit einer Haltevorrichtung versehen ist, die eine an der der Gehäuseöffnung (11) zuzukehrenden Unterseite des Deckelteils (20) angebrachte Federklammer (22) mit mehreren radial nach außen gerichteten Federzungen (220) aufweist, die in ihrem in radialer Richtung verlaufenden Längsschnitt endseitig mit nach unten von dem Deckelteil (20) weg ausgemuldeten Federabschnitten (221,222) versehen sind, um den Druckentlastungsdeckel an der Gehäuseöffnung (11) festzuhalten,
**dadurch gekennzeichnet,**
**dass** die Federabschnitte (221, 222) in ihrem in radialer Richtung verlaufenden Längsschnitt nach unten von dem Deckelteil (20) weg, U-förmig oder V-förmig, in der Weise ausgemuldet sind, dass ihre außenliegenden Muldenschenkel genügend spitzwinklig gegenüber der Flächennormalen des Deckelteils (20) beim Aufdrücken des Deckelteils (20) auf die Gehäuseöffnung (11) durch den Öffnungsrand in radialer Richtung federnd zurückbewegbar sind und nach Durchdringen der Gehäuseöffnung mit den freien Endabschnitten ihrer radial außen liegenden Muldenschenkel unter einen Wandbereich um den Öffnungsrand zurückschnappen.

2. Druckentlastungsdeckel nach Anspruch 1,
**dadurch gekennzeichnet,**
**dass** die Federklammer (22) mit einem zentralen Bereich an einem zentral angeordneten Halteabschnitt (201) des Deckelteils (20) angebracht ist.

3. Druckentlastungsdeckel nach Anspruch 1 oder 2,
**dadurch gekennzeichnet,**
**dass** die Federabschnitte (221,222) in ihrem in radialer Richtung verlaufenden Längsschnitt U-förmig nach unten von dem Deckelteil (20) weg ausgemuldet sind und der freie Rand des radial außen liegenden U-Schenkels eine den Wandbereich um die Gehäuseöffnung untergreifende Stützfläche bildet.

4. Druckentlastungsdeckel nach einem der vorhergehenden Ansprüche,
**dadurch gekennzeichnet,**
**dass** zumindest ein Teil der Federabschnitte (221) soweit von der Unterseite des Deckelteils (20) beabstandet sind, dass im aufgesetzten Zustand die Dichtung (21) unter Andruck auf der Oberseite des Wandbereichs um den Öffnungsrand gehalten ist.

5. Druckentlastungsdeckel nach Anspruch 4,
**dadurch gekennzeichnet,**
**dass** ein weiterer Teil der Federabschnitte (222) von der Unterseite des Deckelteils (20) soweit beabstandet sind, dass sie im aufgesetzten Zustand von der Unterseite des Wandbereichs um den Öffnungsrand beabstandet sind.

6. Druckentlastungsdeckel nach Anspruch 5,
**dadurch gekennzeichnet,**
**dass** die Federzungen (220), die mit den weiter von der Unterseite des Deckelteils (20) beabstandeten Federabschnitten (222) verbunden sind, nach unten mittels eines ebenfalls an der Unterseite des Deckelteils (20) angebrachten Stützteils (23) abgestützt sind und/oder versteift sind.

7. Behältnis mit mindestens einem zellenartigen Hohlraum, insbesondere Batterie oder Akkumulator, mit mindestens einem Druckentlastungsdeckel nach einem der vorhergehenden Ansprüche.

## Claims

1. Pressure relief cover for reducing pressure occurring in a cell-like cavity, such as a battery cell, the pressure relief cover comprising a cover part (2), which supports a seal (21) for sealing a housing opening (11) up to a predetermined cell pressure and is provided with a holding device, which holding device comprises a spring clip (22), which is attached to the underside of the cover part (20) facing the housing opening (11) and has a plurality of radially outwardly directed spring tongues (220), which are provided at the end, in their radially extending longitudinal section, with spring portions (221,222) troughed downward and away from the cover part (20) in order to lock the pressure relief cover against the housing opening (11),
**characterized in that**
the spring portions (221, 222), in their radially extending longitudinal section, are troughed downward and away from the cover part (20) in a U-shaped or V-shaped manner such that, when the cover part (20) is pressed onto the housing opening (11), the outer trough legs of the spring portions are resiliently movable, at a sufficiently acute angle with respect to the surface normal of the cover part (20), in the radial direction back through the opening rim and, after passing through the housing opening with the free end portions of their radially outward trough legs, snap back under a wall region around the opening rim.

2. Pressure relief cover according to claim 1,
**characterized in that**
a central region of the spring clip (22) is attached to a centrally arranged holding portion (201) of the cover part (20).

3. Pressure relief cover according to claim 1 or 2,
**characterized in that**
the spring portions (221,222), in their radially extending longitudinal portion, are troughed downward in a U-shaped manner and away from the cover part (20) and the free edge of the radially outward U-leg forms a support surface engaging underneath the wall region around the housing opening.

4. Pressure relief cover according to any of the preceding claims,
**characterized in that**
at least some of the spring portions (221) are spaced apart from the underside of the cover part (20) to the extent that, when attached, the seal (21) is held under pressure on the top face of the wall region around the opening rim.

5. Pressure relief cover according to claim 4,
**characterized in that**
a further proportion of the spring portions (222) are spaced apart from the underside of the cover part (20) to the extent that, when attached, they are spaced apart from the underside of the wall region around the opening rim.

6. Pressure relief cover according to claim 5,
**characterized in that**
the spring tongues (220), which are connected to the spring portions (222) spaced further apart from the underside of the cover part (20), are supported and/or reinforced at the bottom by means of a support part (23) which is likewise attached to the underside of the cover part (20).

7. Container comprising at least one cell-like cavity, in particular a battery or an accumulator, having at least one pressure relief cover according to any of the preceding claims.

## Revendications

1. Couvercle de décompression permettant de réduire la pression générée dans une cavité de type cellule, telle qu'une cellule de batterie, comportant une partie de couvercle (2) qui porte un joint (21) pour rendre étanche une ouverture de boîtier (11) jusqu'à une pression de cellule prédéfinie et est pourvue d'un dispositif de maintien qui présente une pince élastique (22) montée sur la face inférieure de la partie de couvercle (20) faisant face à l'ouverture de boîtier (11) et comportant plusieurs languettes élastiques (220) dirigées radialement vers l'extérieur, lesquelles sont pourvues de sections élastiques (221,222) en forme de creux s'éloignant de la partie de couvercle (20) vers le bas dans leur section longitudinale s'étendant dans la direction radiale côté extrémité, afin de maintenir le couvercle de décompression sur l'ouverture de boîtier (11),
**caractérisé en ce que**
les sections élastiques (221, 222) sont en forme de creux à la manière d'un U ou d'un V en s'éloignant de la partie de couvercle (20) vers le bas dans leur section longitudinale s'étendant dans la direction radiale, **en ce que**, lorsque la partie de couvercle (20) est pressée sur l'ouverture du boîtier (11), leurs branches de creux extérieures peuvent être ramenées de manière élastique par le bord d'ouverture et dans la direction radiale de manière suffisamment inclinée en angle aigu par rapport à la normale de la surface de la partie de couvercle (20) et, après avoir pénétré dans l'ouverture de boîtier, leurs branches de creux situées radialement à l'extérieur se détendent en dessous d'une zone de paroi autour du bord d'ouverture avec les sections d'extrémité libres.

2. Couvercle de décompression selon la revendication 1,
**caractérisé en ce que**
la pince élastique (22) est montée avec une zone centrale sur une section de maintien (201) disposée au centre de la partie de couvercle (20).

3. Couvercle de décompression selon la revendication 1 ou 2,
**caractérisé en ce que**
les sections élastiques (221,222) sont en forme de creux à la manière d'un U en s'éloignant de la partie de couvercle (20) vers le bas dans leur section longitudinale s'étendant dans la direction radiale, et le bord libre de la branche en U située radialement à l'extérieur forme une surface de soutien venant en prise par dessous avec la zone de paroi autour de l'ouverture de boîtier.

4. Couvercle de décompression selon l'une des revendications précédentes, **caractérisé en ce que**
au moins une partie des sections élastiques (221) sont espacées de la face inférieure de la partie de couvercle (20) dans la mesure où, à l'état installé, le joint (21) est maintenu sous pression sur la face supérieure de la zone de paroi autour du bord d'ouverture.

5. Couvercle de décompression selon la revendication 4,
**caractérisé en ce que**
une autre partie des sections élastiques (222) sont espacées de la face inférieure de la partie de couvercle (20) dans la mesure où, à l'état installé, elles sont espacées de la face inférieure de la zone de paroi autour du bord d'ouverture.

6. Couvercle de décompression selon la revendication 5,
**caractérisé en ce que**
les languettes élastiques (220), lesquelles sont reliées aux sections élastiques (222) plus espacées de la face inférieure de la partie de couvercle (20), sont soutenues et/ou sont rigidifiées vers le bas au moyen d'une partie de soutien (23) également fixée à la face inférieure de la partie de couvercle (20).

7. Récipient comportant au moins une cavité de type cellule, en particulier batterie ou accumulateur, comportant au moins un couvercle de décompression selon l'une des revendications précédentes.
